# FASCICULE DE BREVET EUROPEEN

(11) **EP 1 343 995 B1**
(45) Date de publication et mention de la délivrance du brevet: **05.04.2006**
(21) Numéro de dépôt: 01995745.5
(22) Date de dépôt: 20.12.2001
(51) Int. Cl.: F16L 37/084

(54) **COUPLEUR RAPIDE AVEC TEMOIN DE CONNEXION**
SCHNELLKUPPLUNG MIT VERBINDUNGSANZEIGE
FAST COUPLER WITH CONNECTION INDICATOR

(30) Priorité: 22.12.2000 FR 0016908
(43) Date de publication de la demande: 17.09.2003
(73) Titulaire: LEGRIS SA, 35000 Rennes (FR)
(72) Inventeur: PODER, Philippe, F-35580 GUICHEN (FR)
(74) Mandataire: Robert, Jean-Pierre
(86) Numéro de dépôt international: PCT/FR2001/004101
(87) Numéro de publication internationale: WO 2002/052188

(56) Documents cités:
- DE-C- 19 822 574
- US-A- 5 441 313
- US-A- 6 082 779

## Description

La présente invention concerne un coupleur rapide comportant une partie mâle et une partie femelle qui s'accouplent par simple introduction de l'une dans l'autre et, plus particulièrement, un connecteur rapide et qui possède des moyens permettant une vérification rapide de la qualité de l'accouplement réalisé.

Dans des circuits traversés par des fluides sous pression et qui mettent en oeuvre des coupleurs rapides, il est souhaitable, voire exigé, d'être assuré de la réalisation correcte des connexions. En effet, une connexion mal réalisée est tout d'abord une source de fuite et est un risque de désaccouplement dont la conséquence la plus bénigne est de mettre en panne la machine comportant ces circuits de fluide sous pression et, si cette machine est une automobile, d'être une source d'accident (absence de pression dans les circuits pneumatiques de freinage, fuite de carburant à l'intérieur du compartiment moteur pouvant conduire à un incendie...).

De nombreux constructeurs ont proposé d'associer à ce type de coupleurs rapides un dispositif indicateur de la réalisation correcte de la connexion. Pour illustrer ce type de dispositif connu, on citera le document US-A- 4 946 205, le document US-A-5 152 555 qui décrivent une sorte de fourchette dont les branches, logées dans des rainures du corps de l'élément femelle du coupleur, font saillie à l'intérieur de l'alésage de cet élément femelle pour être situées sur le trajet d'une collerette de l'élément mâle. Ces branches possèdent un crochet intérieur qui interdit de retirer le dispositif tant que la collerette de l'élément mâle n'est pas située à leur niveau où il joue le rôle d'une came les écartant pour libérer les crochets. Comme la position de la collerette par rapport à l'élément femelle, lorsque celle-ci est au niveau des branches de la fourchette, correspond à une réalisation correcte de l'accouplement, le fait de pouvoir retirer le dispositif indicateur est le gage de la qualité de la connexion réalisée. L'un des inconvénients de ces dispositifs découle de sa structure même. En effet, la fourchette doit être suffisamment raide pour que ses branches ne puissent pas être écartées facilement l'une de l'autre par une simple manipulation de rotation autour de l'axe du coupleur, faisant jouer à la paroi de l'élément femelle de ce coupleur un rôle de came écartant les branches. Dans ce cas alors, le dispositif oppose une résistance importante à l'introduction de l'élément mâle du coupleur dans l'élément femelle qui peut tromper l'installateur croyant être parvenu à une position de connexion correcte. Ceci est d'autant plus vrai que l'épaisseur des branches du dispositif indicateur est relativement faible afin que sa mise en place ne vienne pas ajouter à la longueur du coupleur, ce qui impose d'avoir des surfaces de glissement de la collerette de l'élément mâle sur les branches de l'indicateur faiblement inclinées par rapport au plan radial alors que pour adoucir l'effort de pénétration il conviendrait de disposer de surface de glissement fortement inclinées, ce qui imposerait une épaisseur du dispositif beaucoup plus importante. Le compromis réalisé dans la pratique est tel que la clé de confirmation de la connexion peut être extraite de son logement par simple manipulation, ce qui est un inconvénient.

Il est par ailleurs connu par le document FR 2 705 431 une autre solution pour indiquer le caractère correct de l'accouplement entre les deux parties du coupleur à rapprocher du document US 6 082 779 qui en est une variante dans laquelle le témoin est rendu imperdable.

Enfin, le document DE-C-198 22 574 décrit un dispositif conforme au préambule de la revendication 1 dans lequel le témoin est directement découplé du raccord par la collerette de l'élément mâle et s'extrait axialement.

Par la présente invention, on propose une variante de réalisation de ce dernier dispositif dans laquelle le témoin n'est découplé que si le verrou a été manoeuvré.

A cet effet, l'invention a pour objet un coupleur selon la revendication 1.

D'autres caractéristiques et avantages de l'invention ressortiront de la description, donnée ci-après de quelques exemples de sa réalisation.

Il sera fait référence aux dessins annexés parmi lesquels
- les figures 1 et 2 sont deux vues partielles d'un mode de réalisation d'un coupleur selon l'invention, la figure 1 étant une coupe axiale et la figure 2 une vue suivant F de la figure 1,
- la figure 3 est une vue en coupe axiale partielle d'un coupleur selon les figures 1 et 2 avec une variante de réalisation du dispositif témoin.

Un coupleur selon l'invention comporte une pièce femelle 1 divisée en plusieurs sections. Une première section 2 possède un canal intérieur 3 et des moyens extérieurs 4, dits en dent de sapin, pour être introduite à l'intérieur d'un tube non représenté. La deuxième section 5 de cette pièce 1 comporte un chambrage 6 de diamètre déterminé pour accueillir le nez d'un embout 7 formant la pièce mâle du coupleur.

La troisième section 8 de cette pièce femelle comporte un chambrage 9 de diamètre plus important que le chambrage 6 pour accueillir deux joints toriques 10 et un insert 11 de blocage de ceux-ci. Le diamètre intérieur de l'insert est égal au diamètre du chambrage 6. Enfin la pièce femelle 1 comporte une quatrième section 12 dont le diamètre intérieur 13 est encore plus important que celui des chambrages précédents pour pouvoir permettre le passage libre d'une collerette 14 portée par l'embout 7. A son extrémité ouverte sur l'extérieur, la dernière section 12 de la pièce femelle 1 comporte un verrou 15 pour empêcher l'extraction de l'embout 7 lorsqu'il est introduit correctement dans la pièce femelle 1. Ce verrou 15 est constitué par une bague qui peut coulisser dans un logement ouvert 15a, réalisé transversalement dans la pièce femelle 1 et qui comporte une ou deux pattes élastiques extérieures 16 qui tendent à décaler la bague 15 par rapport au chambrage 13. Une partie du bord intérieur de la bague 15 est en forme de surface conique 17 de sorte qu'au passage de la collerette 14, la bague 15 est abaissée à l'encontre de l'effet des lames élastiques 15 jusqu'à ce que la collerette 14 soit logée dans le chambrage 13 au-delà de cette bague 15. Les languettes 16 sont alors décomprimées et la bague se retrouve en position libre, décalée par rapport au chambrage 13 et l'un de ces flancs prend contact avec le flanc arrière de la collerette 14 et constitue une butée s'opposant à l'extraction de l'embout 7.

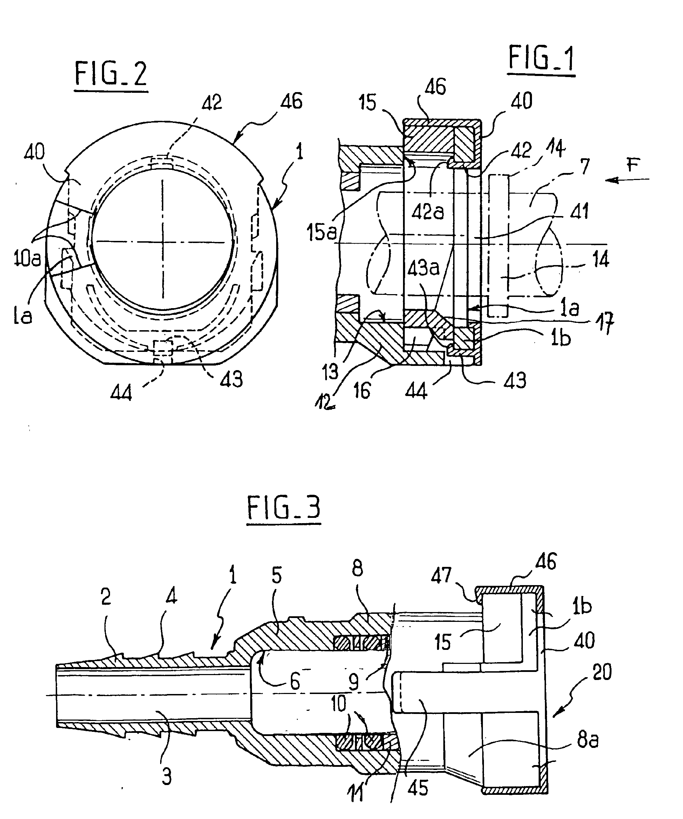

Aux figures, le dispositif témoin se présente sous la forme d'une rondelle 40 venant coiffer la face frontale 1a d'entrée de la pièce femelle 1 du coupleur. Telle que représentée, cette rondelle est partielle, limitée par deux bords 40a qui définissent une fente autorisant une déformation de la rondelle, Les bords 40a pourraient être jointifs. Cette rondelle s'emboîte par un rebord central 41 dans l'ouverture de la pièce femelle. Le diamètre intérieur de cc rebord 41 est supérieur à celui de la collerette 14 de la pièce mâle du coupleur. Deux pattes 42 et 43 s'étendent dans une direction parallèle à l'axe de la pièce femelle l'une dans l'ouverture d'entrée et l'autre dans un embrèvement 44 prévu dans la paroi avant pour que l'extrémité de ces pattes forme une dent 42a, 43a qui se trouve dans le logement 15a du verrou 15 pour s'accrocher à la paroi 1b de la pièce 1 qui sépare le logement 15a de la face 1a. Au passage de la collerette 14, le verrou 15 est manoeuvré vers le bas de la figure 1 et déloge ces dents du logement 15a. La rondelle 40 est alors expulsée vers la droite de la figure et reste sur la conduite à laquelle l'embout 7 est raccordé. Si la rondelle 40 est fendue, l'opérateur peut alors la retirer complètement de la conduite s'il le désire en faisant passer la conduite dans la fente limitée par les bords 40a après avoir déformé la rondelle. Il esL aussi possible, comme illustré à la figure 3, d'équiper la rondelle 40 de deux ou trois bras 45 de retenue qui limitent l'amplitude de son expulsion en venant buter contre un épaulement conique 8a externe de la pièce 1.

On notera par ailleurs que la rondelle 40 comporte également une sorte de visière cylindrique supérieure 46 qui vient recouvrir la partie du verrou 15 qui fait saillie hors du corps femelle 1 et constitue le poussoir de déverrouillage. On comprend en effet que lorsque la collerette 14 a atteint le fond du chambrage 13, le verrou 15 a retrouvé sa position de verrouillage (celle représentée en figure 1) permettant la remise en place du diopooitif 40 en façade de l'élément 1. Dans cette position, la visière 46 interdit l'accès au verrou et supprime toute possibilité d'un actionnement intempestif de celui-ci.

Enfin, on remarquera à la figure 3 que cette visière 46 comporte une dent arrière 47 (uniquement en partie haute centrale) qui retient le dispositif témoin derrière le verrou 15 (sa partie accessible à l'extérieur du corps formant poussoir qui affleure le bord supérieur de la paroi 1b d'entrée de la pièce 1). Au passage de la collerette 14, le verrou 15 s'abaisse, libérant la rondelle 40 qui est expulsée (par la réaction élastique des pattes 42, 43) vers la droite. Ce déplacement est cependant arrêté par la dent 47 qui prend appui derrière la paroi 1b alors que le verrou est en position basse. Si pour une raison quelconque ce verrou ne remonte pas, ce qui est le signe d'une mauvaise connexion, le dispositif témoin reste accroché par la dent 47 derrière la paroi 1b, indiquant ainsi à l'opérateur qu'il faut intervenir. En revanche une bonne connexion laisse le verrou 15 remonter. Ce dernier repousse alors la dent 47 et le dispositif 40 peut être séparé de la pièce femelle 1 jusqu'à ce que, le cas échéant, la retenue des pattes 45 intervienne.

## Revendications

1. Coupleur rapide pour circuit de fluide comportant une pièce mâle (7) avec une collerette (14) extérieure et une pièce femelle (1), la pièce femelle (1) ayant un chambrage étagé dont la section (13) de plus grand diamètre peut accueillir la collerette (14) extérieure de la pièce mâle (7), au-delà d'un verrou mobile (15) dans un logement transversal (15a) à ce chambrage, et comportant un dispositif (20) témoin de connexion encliqueté sur la pièce femelle (1) par au moins deux pattes (42, 43) s'étendant dans une direction parallèle à l'axe de la pièce femelle (1) avec une dent d'encliquetage, le dispositif témoin (20) comportant une partie (40) en forme d'anneau entourant le circuit hydraulique fermé par le coupleur (1, 7), **caractérisé en ce que** chaque dent d'encliquetage (42a, 43a) est située à l'extrémité de la patte (42, 43) correspondante pour faire saillie dans le logement (15a) du verrou (15) et pour en être délogée par le verrou (15) lors du passage de la collerette (14) au travers de ce dernier.

2. Coupleur selon la revendication 1, **caractérisé en ce que** le dispositif témoin (20) est en forme de rondelle partielle ou fendue.

3. Coupleur selon la revendication 1 et 2, **caractérisé en ce que** la rondelle (40) comporte une prolongation cylindrique partielle (46) s'étendant, lorsque la rondelle est encliquetée, en couverture d'une zone externe de la pièce femelle (1) formant obstacle à l'accès au verrou (15).

4. Coupleur selon la revendications 3, **caractérisé en ce que** le verrou (15) comportant de manière connue un poussoir saillant radialement à l'extérieur de la pièce femelle, au voisinage de l'entrée (1a) du chambrage (13) et affleurant un rebord externe (1b) de cette entrée (la), la rondelle comporte au moins une dent (47) d'encliquetage s'accrochant derrière le poussoir (15) et derrière le rebord (1b) d'entrée du chambrage pendant l'effacement du poussoir (15) lors de l'introduction de la pièce mâle (7) du coupleur dans la pièce femelle (1).

5. Coupleur selon l'une quelconque des revendications 2 à 4, **caractérisé en ce que** la rondelle (40) est pourvue d'au moins deux bras (45) de limitation de sa course lors de son expulsion.

## Patentansprüche

1. Schnellverbinder für einen Fluidkreisklauf, umfassend ein aufzunehmendes Element (7) mit einem Außenflansch (14) und ein aufnehmendes Element (1), wobei das aufnehmende Element (1) eine abgestufte Aussparung hat, deren Abschnitt (13) mit dem größeren Durchmesser den Außenflansch (14) des aufzunehmenden Elements (7) jenseits eines beweglichen Riegels (15) der sich in einer in Querrichtung zur Aussparung verlaufenden Aufnahme (15a) befindet, aufnehmen kann, und umfassend eine zur Anzeige der Verbindung bestimmte Anzeigevorrichtung (20), die an dem aufnehmenden Element (1) mittels mindestens zweier Laschen (42, 43), die sich in einer parallel zur Achse des aufnehmenden Elements (1) verlaufenden Richtung erstrecken und einen Einrastzahn haben, verrastet ist, wobei die Anzeigevorrichtung (20) einen Abschnitt (40) in Ringform umfasst, welcher die durch den Verbinder (1, 7) angeschlossene hydraulische Leitung umgibt, **dadurch gekennzeichnet, dass** jeder Einrastzahn (42a, 43a) am entsprechenden Ende der Lasche (42, 43) so angeordnet ist, dass er in die Aufnahme (15a) für den Riegel (15) hineinragt, sodass er durch den Riegel (15) hieraus ausgelenkt wird, wenn der Flansch (14) durch diesen hindurch bewegt wird.

2. Verbinder nach Anspruch 1, **dadurch gekennzeichnet, dass** die Anzeigevorrichtung (20) in Form einer teilweise geschlossenen oder mit einem Schlitz versehenen Ringscheibe ausgebildet ist.

3. Verbinder nach Anspruch 1 und 2, **dadurch gekennzeichnet, dass** die Scheibe (40) eine teilweise zylindrische Verlängerung (46) umfasst, die sich, wenn die Scheibe eingerastet ist, derart erstreckt, dass sie einen Außenbereich des aufnehmenden Elements (1) so bedeckt, dass sie den Zugriff zu dem Riegel (15) verhindert.

4. Verbinder nach Anspruch 3, **dadurch gekennzeichnet, dass**, wenn der Riegel (15) auf bekannte Weise einen Stößel umfasst, der nahe dem Eingang (1a) der Aussparung (13) und fluchtend mit einem Außenrand (1b) des Eingangs (1a) radial über die Außenseite des aufnehmenden Elements hinausragt, die Scheibe zumindest einen Rastzahn (47) umfasst, der während des Zurückkehrens des Stößels (15) beim Einführen des aufzunehmenden Elements (7) des Verbinders in das aufnehmende Element (1) hinter den Stößel (15) und hinter den Rand (1b) des Eingangs der Aussparung greift.

5. Verbinder nach einem der Ansprüche 2 bis 4, **dadurch gekennzeichnet, dass** die Scheibe (40) zumindest zwei Arme (45) hat, die ihren Hubweg bei ihrem Abstoßen begrenzen.

## Claims

1. A quick coupler for a fluid circuit, the coupler comprising a male portion (7) with an outer collar (14), and a female portion (1), the female portion (1) having stepped counterbore with a maximum diameter section (13) that can receive the outer collar (14) of the male portion (7), which section is beyond a latch (15) that is movable in a housing (15a) extending transversely to the counterbore, and including a connection indicator device (20) that is snap-fastened onto the female portion (1) by at least two tabs (42, 43) extending in a direction parallel to the axis of the female portion (1), with a snap-fastening tooth, the indicator device (20) comprising a ring-shaped portion (40) surrounding the hydraulic circuit closed by the coupler (1, 7), the coupler being **characterized in that** each tooth (42a, 43a) is located at the end of the corresponding tab (42, 43) for projecting into the housing (15a) of the latch (15), and to be dislodged therefrom by the latch (15) when the collar (14) is being passed through the latch.

2. A coupler according to claim 1, **characterized in that** the indicator device (20) is in the form of a split or slotted washer.

3. A coupler according to claim 1 and claim 2, **characterized in that** the washer (40) includes a partial cylindrical extension (46), which, when the washer is snap-fastened, covers an outer zone of the female portion (1), thereby impeding access to the latch (15).

4. A coupler according to claim 3, **characterized in that** the latch (15) includes, in known manner, a pusher that projects radially out from the female portion, in the vicinity of the inlet (1a) of the counterbore (13) and that is flush with an outer rim (1b) of said inlet (1a), and the washer includes at least one snap-fastening tooth (47) that catches behind the pusher (15) and behind the inlet rim (1b) of the counterbore during displacement of the pusher (15) while the male portion (7) of the coupler is being inserted into the female portion (1).

5. A coupler according to one claim of claims 2 to 4, **characterized in that** the washer (40) is provided with at least two arms (45) for limiting its stroke while it is being expelled.
